# FASCICULE DE BREVET EUROPEEN

(11) **EP 1 085 109 B1**
(45) Date de publication et mention de la délivrance du brevet: **11.02.2009**
(21) Numéro de dépôt: 00402538.3
(22) Date de dépôt: 14.09.2000
(51) Int. Cl.: C23C 30/00, C23C 28/00

(54) **Composition de barrière thermique de faible conductivité thermique, pièce mécanique en superalliage protégée par un revêtement de céramique ayant une telle composition, et méthode de réalisation du revêtement de céramique**
Zusammensetzung einer Wärmedämmschicht mit niedriger Temperaturleitfähigkeit, Gegenstand aus Superlegierung mit keramischem Überschutz solcher Zusammensetzung und Verfahren zu dessen Herstellung
Thermal barrier coating composition with low thermal conductivity, superalloy mechanical part with ceramic coating of said composition and method for obtaining such coating

(30) Priorité: 16.09.1999 FR 9911565
(43) Date de publication de la demande: 21.03.2001
(73) Titulaire: SNECMA, 75015 Paris (FR)
(72) Inventeur: Alperine, Serge, 75004 Paris (FR); Lavigne, Odile, 75013 Paris (FR); Arnault, Véronique, 75020 Paris (FR); Mevrel, Rémy, 92350 Le Plessis Robinson (FR)

(56) Documents cités:
- EP-A- 0 354 573
- EP-A- 0 812 931
- EP-A- 0 825 271
- US-A- 3 525 597

## Description

L'invention concerne une composition de barrière thermique de faible conductivité thermique, une pièce mécanique en superalliage protégée par un revêtement de céramique ayant une telle composition, et une méthode de réalisation du revêtement de céramique.

Les constructeurs de moteurs à turbine, terrestres et aéronautiques, sont confrontés depuis plus de trente ans à des impératifs d'augmentation du rendement des turbomachines, de diminution de leur consommation spécifique en carburant et des émissions polluantes de types COₓ, SOₓ, NOₓ et imbrûlés. Une des façons de répondre à ces impératifs consiste à se rapprocher de la stoéchiométrie de combustion du carburant et donc à augmenter la température des gaz sortant de la chambre de combustion et impactant les premiers étages de turbine.

Corrélativement, il s'est avéré nécessaire de rendre les matériaux de la turbine compatibles avec cette élévation de température des gaz de combustion. Une des solutions retenues consiste à améliorer les techniques de refroidissement des aubes de turbine. Cette évolution implique une forte augmentation de la technicité et du coût de réalisation des pièces. Une autre solution consiste à faire évoluer la réfractarité des matériaux utilisés (température limite d'usage et durée de vie en fluage et en fatigue). Cette solution a été mise en oeuvre lors de l'apparition des superalliages à base de nickel et/ou de cobalt. Elle a connu une évolution technique considérable par le passage des superalliages équiaxes aux superalliages monocristallins (gain de 80 à 100°C en fluage). Cette voie ne peut aujourd'hui être exploitée qu'à des coûts de développement importants (superalliages dits de troisième génération, devant permettre un gain supplémentaire en fluage de 20°C environ). Au-delà un nouveau changement de famille de matériau s'impose.

Une alternative à ce changement de famille de matériaux consiste à déposer sur les pièces chaudes en superalliages un revêtement isolant thermique appelé barrière thermique. Ce revêtement de céramique permet sur une pièce refroidie de créer, en régime permanent de fonctionnement, un gradient thermique au travers de la céramique dont l'amplitude totale peut dépasser 200°C. La température de fonctionnement du métal sous-jacent se trouve diminuée en proportion avec une incidence considérable sur le volume d'air de refroidissement nécessaire, la durée de vie de la pièce et la consommation spécifique du moteur.

Le revêtement de céramique peut être déposé sur la pièce à revêtir en utilisant des procédés divers appartenant pour la plupart d'entre eux à deux familles distinctes : les revêtements projetés et les revêtements déposés par voie physique en phase vapeur. D'autres procédés de dépôts de type dépôt chimique en phase vapeur (CVD) assisté par plasma peuvent également être utilisés.

Pour les revêtements projetés, un dépôt d'oxyde à base de zircone est effectué par des techniques apparentées à la projection plasma. Le revêtement est constitué d'un empilement de gouttelettes de céramique fondues puis trempées par choc, aplaties et empilées de façon à former un dépôt imparfaitement densifié d'une épaisseur comprise entre 50 µm et 1mm. Une des caractéristiques de ce type de revêtement est une rugosité intrinsèquement élevée (La rugosité Ra est comprise typiquement entre 5 et 35 µm). Le mode de dégradation en service associé le plus souvent à ce revêtement est caractérisé par la propagation lente d'une fissure dans la céramique parallèlement à l'interface céramique/métal.

Dans le cas des revêtements déposés par voie physique en phase vapeur, le problème est sensiblement différent. Un tel dépôt peut être réalisé par évaporation sous bombardement électronique. Sa caractéristique principale est que le revêtement est constitué d'un assemblage de colonnettes très fines (entre 0,2 et 10 µm typiquement) orientées sensiblement perpendiculairement à la surface à revêtir. L'épaisseur d'un tel revêtement peut être comprise entre 20 et 600 µm. Un tel assemblage présente la propriété intéressante de reproduire sans l'altérer l'état de surface du substrat recouvert. En particulier, dans le cas d'aubes de turbines, des rugosités finales largement inférieures au micromètre peuvent être obtenues, ce qui est très avantageux pour les propriétés aérodynamiques de l'aube. Une autre conséquence de la structure dite colonnaire des dépôts de céramique par voie physique en phase vapeur, est que l'espace situé entre les colonnettes permet au revêtement d'accommoder de manière très efficace les contraintes de compression subies en service à cause du différentiel de dilatation avec le substrat en superalliage. Dans ce cas, des durées de vie élevées en fatigue thermique à haute température peuvent être atteintes et la rupture du revêtement a lieu au voisinage de l'interface sous-couche/céramique.

Les techniques de dépôt chimique en phase vapeur produisent des revêtements dont la morphologie est colonnaire et sensiblement équivalente à celle des dépôts effectués par voie physique en phase vapeur. Dans les techniques de dépôt chimique ou physique en phase vapeur, la formation d'oxyde résulte d'une réaction moléculaire entre des atomes ou des ions métalliques et l'oxygène.

Les revêtements de barrière thermique sont composés de mélange d'oxydes, le plus souvent à base de zircone. Cet oxyde constitue un compromis intéressant entre un matériau possédant une conductivité thermique assez faible et un coefficient de dilatation relativement élevé, proche de celui des alliages à base de nickel et ou de cobalt sur lesquels on souhaite le déposer. Une des compositions de céramique donnant le plus de satisfaction est la zircone totalement ou partiellement stabilisée par un oxyde tel que par exemple par l'oxyde d'yttrium : ZrO₂ + 6 à 8% massique d'Y₂O₃. Le rôle de l'oxyde d'yttrium est de stabiliser la variété allotropique cubique C et ou tétragonale non transformable t' de la zircone, et d'éviter ainsi des transitions de phases de type martensitique lors des excursions entre la température ambiante et la température de service élevée de la pièce.

La fonctionnalité première d'un revêtement de barrière thermique est de ralentir les échanges de chaleur entre un milieu extérieur composé de gaz chauds et la pièce métallique recouverte, ladite pièce métallique étant le plus souvent elle-même refroidie par circulation forcée de gaz froids. Les échanges de chaleur entre le revêtement céramique et le métal sous-jacent peuvent être conductifs et, dans une moindre mesure, radiatifs. Il est bien connu que la conductivité thermique d'un oxyde est la somme d'une contribution phonique, qui varie comme 1/T, et d'une contribution radiative, qui varie en T³. Dans le cas des zircones partiellement ou totalement stabilisées, l'expérience montre que si la contribution radiative est importante au-delà de 500°C dans un monocristal (la conductivité thermique augmente rapidement avec la température), elle est négligeable jusqu'à 1200°C dans un polycristal puisque l'on observe une décroissance de la conductivité thermique lorsque la température augmente. Ce phénomène est attribué à la rétrodiffusion sur les défauts du polycristal : joints de grains, porosités. Dans le cas des revêtements de barrière thermique, par nature polycristallins, l'effet radiatif sur les processus de transport de la chaleur est du second ordre par rapport à l'effet conductif. Par conséquent, pour améliorer le pouvoir isolant d'une barrière thermique, le paramètre pertinent qu'il convient de régler est le processus de transport par les phonons.

Il existe plusieurs méthodes permettant de diminuer la conductivité thermique du revêtement. Ces méthodes dérivent du fait que les revêtements de barrière thermique sont des couches céramiques poreuses et que la conductivité thermique du revêtement est celle d'un assemblage hétérogène de deux milieux conducteurs de la chaleur; ces deux milieux sont le matériau céramique lui-même, de conductivité intrinsèque λᵢₙₜᵣ, et les pores ou microfissures du revêtement dont la conductivité est proche de celle du gaz qui les emplit en conditions de service.

La conductivité effective du revêtement λ_{réel}, est comprise entre λᵢₙₜᵣ et la conductivité de l'air λₐᵢᵣ. On peut en fait écrire que λ_{réel} est une fonction complexe de λ_{intr,} λₐᵢᵣ et de la morphologie du revêtement.

Une première solution pour obtenir un revêtement de faible conductivité thermique consiste, à utiliser une céramique dont la composition céramique est classique, par exemple de la zircone partiellement stabilisée par 6 à 8% en poids d'oxyde d'yttrium, et à modifier la morphologie du revêtement, c'est à dire la proportion, la répartition et l'orientation des pores et microfissures du revêtement, ou bien l'arrangement de la matière sous forme de colonnes ou de strates, de façon à diminuer λ_{réel}. Il est possible de parvenir à ce résultat en modifiant les paramètres de dépôt du revêtement.

Une deuxième solution consiste à chercher, en modifiant la composition chimique du revêtement, à diminuer directement λᵢₙₜᵣ, sans altérer sa morphologie, tout en conservant les autres propriétés du revêtement. Il est bien connu par exemple que l'introduction d'yttrine dans la zircone abaisse la conductivité thermique par l'introduction de lacunes dans le réseau due aux valences différentes des ions de zirconium et d'yttrium. De manière générale, l'introduction de défauts ponctuels dans le réseau, qui agissent comme des centres de rétrodiffusion des phonons, contribue à réduire la conductivité thermique. C'est cette solution qui est mise en oeuvre dans la présente invention.

La demande de brevet EP 0 825 271 A1 décrit un revêtement céramique à base de zircone contenant deux oxydes additionnels :
- un premier oxyde dont la fonction est de stabiliser la forme tétragonale ou cubique de la zircone. Cet oxyde peut être l'oxyde d'yttrium, de calcium, de magnésium, d'indium, de scandium ou d'ytterbium,
- un deuxième oxyde, dont le rôle est de réduire la conductivité thermique due aux phonons et qui absorde l'énergie radiative dans la bande de longueur d'onde comprise entre 0,3 et 5 µm pour diminuer la conductivité thermique due aux photons.

Dans une version alternative, la couche céramique à base de zircone contient trois oxydes additionnels :
- Un premier oxyde dont la fonction est de stabiliser la forme tétragonale ou cubique de la zircone. Cet oxyde peut être l'oxyde d'yttrium, de calcium, de magnésium, d'indium, de scandium ou d'ytterbium,
- Un deuxième oxyde, dont le rôle est de réduire la conductivité thermique due aux phonons et
- Un troisième oxyde qui absorde l'énergie radiative dans la bande de longueur d'onde comprise entre 0,3 et 5 µm pour diminuer la conductivité thermique due aux photons.

Les compositions proposées dans ce brevet sont complexes et coûteuses.

Le but de l'invention est de déterminer une nouvelle composition de céramique à base de zircone permettant d'obtenir un revêtement de barrière thermique de plus faible conductivité thermique que la zircone yttriée habituellement utilisée pour les systèmes d'isolation thermique et en particulier pour les barrières thermiques.

Pour cela, l'invention consiste à élaborer une nouvelle composition de barrière thermique, constituée d'une base de zircone, et d'un oxyde de dysprosium qui permet à la fois de stabiliser la zircone et de réduire la conductivité thermique intrinsèque de la céramique par l'introduction de défauts ponctuels dans le réseau, tout en préservant ses principales autres caractéristiques telles que, par exemple la nature des phases, le coefficient de dilatation, la réfractarité.

Selon l'invention, la composition de barrière thermique de faible conductivité thermique est caractérisée en ce qu'elle est composée d'une base de zircone, d'un oxyde de dysprosium, l'oxyde de dysprosium ayant un double rôle de stabiliser la zircone et d'abaisser la conductivité thermique par phonons de la zircone et un oxyde d'un ion métallique quadrivalent ayant une masse atomique supérieure à celle du zirconium, cet oxyde étant le dioxyde de hafnium.

Avantageusement, la proportion de l'ion dysprosium dans le revêtement est comprise entre 2 et 30 % atomique.

Optionnellement, pour réduire encore la conductivité thermique de la céramique, la zircone contient en outre entre zéro et 30% en mole d'un oxyde contenant un ion métallique quadrivalent de masse supérieure à celle de l'ion zirconium, cet oxyde étant le dioxyde de hafnium.

L'invention concerne aussi une pièce mécanique en superalliage comportant un revêtement de céramique ayant une nouvelle composition telle que décrite ci-dessus.

Avantageusement, le revêtement de céramique est déposé sur une sous-couche de liaison constituée d'un alliage apte à former une couche d'alumine protectrice. L'alliage peut être par exemple du type MCrAlY, M étant un métal choisi parmi le nickel, le cobalt, le fer ou un mélange de ces métaux ; l'alliage peut également être un aluminiure de nickel contenant éventuellement un ou plusieurs métaux choisis parmi le chrome et / ou les métaux précieux tels que le platine, le palladium, le ruthénium, l'iridium, l'osmium, le rhodium, ou un mélange de ces métaux.

L'invention concerne enfin une méthode de réalisation d'un revêtement de barrière thermique sur un substrat en superalliage comportant les étapes suivantes :
- déposer une sous-couche de liaison sur le substrat en superalliage,
- déposer sur la sous-couche, un revêtement de céramique comportant de la zircone et un oxyde de dysprosium pour stabiliser la zircone et réduire la conductivité thermique par phonons de la zircone et jusqu'à 30% en mole de dioxyde de hafnium.

D'autres particularités et avantages de l'invention apparaîtront clairement dans la suite de la description donnée à titre d'exemple non limitatif et faite en regard des figures annexées qui représentent :
La figure 1 : une pièce mécanique en superalliage comportant un revêtement de céramique, selon l'invention.
La figure 2 : les valeurs comparatives de la conductivité thermique obtenue à différentes températures pour un revêtement de barrière thermique comportant une céramique de la sircone et un oxyde de dyprosium et pour un revêtement de barrière thermique comportant une céramique classique.

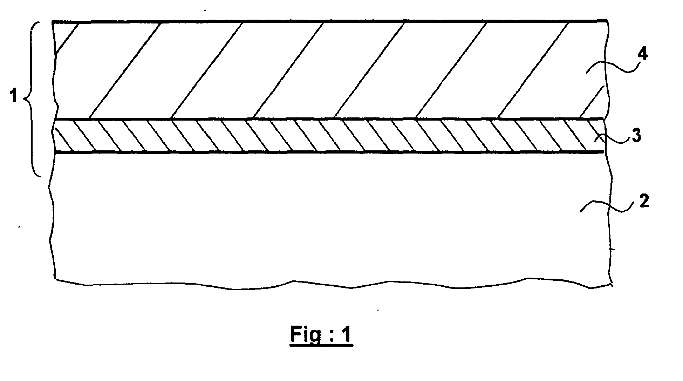

La pièce mécanique représentée sur la figure 1 comporte un revêtement de barrière thermique 1 déposé sur un substrat 2 en superalliage, tel que les superalliages à base de nickel et/ou de cobalt. Le revêtement de barrière thermique 1 comporte une sous-couche métallique 3 déposée sur le substrat 2 selon un procédé connu dans l'état de l'art et une céramique 4 de nouvelle composition, conforme à l'invention, déposée sur la sous-couche.

La sous-couche 3 peut être un alliage alumino-formeur résistant à l'oxydo-corrosion de type MCrAlY (M = Ni et/ou Co et/ou Fe) ou un aluminiure de nickel ou de cobalt modifié ou non par l'adjonction de chrome et / ou d'un ou plusieurs métaux précieux choisis parmi le platine, le palladium, le ruthénium, l'iridium, l'osmium, le rhodium.

La céramique 4 est constituée d'une base de zircone et d'un oxyde de dysprosium permettant de stabiliser la zircone et présentant, de façon surprenante, l'intérêt d'abaisser la conductivité thermique de la céramique dans des proportions beaucoup plus importantes que les autres oxydes utilisés classiquement. Pour obtenir une conductivité thermique encore plus faible, la céramique peut comporter, en outre, un oxyde métallique additionnel comportant un ion métallique quadrivalent ayant une masse atomique supérieure à celle de l'ion zirconium.

L'ion métallique quadrivalent est le hafnium.

### Exemple 1 (ne pas selon l'invention): afin d'évaluer l'intérêt de l'oxyde de dysprosium dans son double rôle de stabilisateur de la zircone et d'oxyde réduisant notablement la conductivité de cette dernière en diminuant la conductivité due aux phonons dans le matériau, l'expérience suivante a été réalisée :

Des poudres céramiques ont été synthétisées avec les trois compositions suivantes :
1. ZrO₂ + 4 mol % Y₂O₃
2. ZrO₂ + 4 mol % Dy₂O₃
3. ZrO₂ + 12 mol % Dy₂O₃

Ces poudres ont été frittées à haute température, sans adjonction d'agent de frittage, de façon à obtenir des pastilles denses avec des niveaux équivalents de porosité résiduelles. La conductivité thermique de ces pastilles a été déterminée via une mesure de diffusivité thermique par une méthode flash à température ambiante. Pour effectuer cette mesure, l'échantillon est irradié sur sa face avant par une brève impulsion thermique. L'enregistrement de l'évolution de la température de la face arrière de l'échantillon permet de déduire la valeur expérimentale de la diffusivité thermique. Afin d'évaluer la conductivité du matériau parfaitement dense, notée λᵢₙₜᵣ, cette conductivité a été corrigée de la porosité résiduelle totale des pastilles. Les résultats sont reproduits dans le tableau suivant :

| Composition | Conductivité en W/m.K |
|---|---|
| ZrO₂ + 4 mol % Y₂O₃ | 2,8 |
| ZrO₂ + 4 mol % Dy₂O₃ | 2,4 |
| ZrO₂ + 12 mol % Dy₂O₃ | 1,7 |

Ces mesures montrent l'effet positif sur la conductivité thermique du remplacement l'oxyde d'yttrium par l'oxyde de dysprosium selon l'invention. Un gain proche de 40% en conductivité à température ambiante peut ainsi être atteint.

### EXEMPLE 2 (ne pas selon l'invention)

Une pièce en alliage Hastelloy X est utilisée comme substrat. Elle est revêtue d'une sous-couche métallique de type MCrAlY selon un procédé connu. Un revêtement de céramique conforme à l'invention est ensuite déposé par évaporation sous faisceau d'électrons sur la sous-couche. La composition du revêtement de céramique est la suivante :
- ZrO₂ :: base
- Dy₂O₃ :: 29,2% en poids

Après l'opération de dépôt, la pièce revêtue subit un traitement thermique de stabilisation de 2 heures à 1080°C sous vide.

Le revêtement céramique de structure colonnaire propre au procédé de mise en oeuvre présente une masse volumique de 4800 kg/m³ et une épaisseur de 190 µm.

L'étude de la structure cristallographique du revêtement par diffraction des rayons X montre qu'il est composé à 100% de la phase cubique et que cette phase reste stable après 100 heures d'exposition à 1250°C.

La conductivité thermique du revêtement céramique a été déterminée comme dans l'exemple 1, mais à des températures variant entre 20°C et 1100°C. Dans ce cas, aucune correction n'a été appliquée liée à la porosité du revêtement. Les valeurs de conductivité thermique de cette céramique ont été comparées à celles obtenues sur une céramique classique de composition ZrO₂- 8% poids Y₂O₃ élaborée selon le même procédé, afin d'évaluer le gain en conductivité obtenu grâce à l'invention. Il a été vérifié que les deux céramiques possèdent la même microstructure pour s'assurer que l'écart en conductivité thermique entre les deux matériaux provient de leur différence de composition et non d'une différence de microstructure.

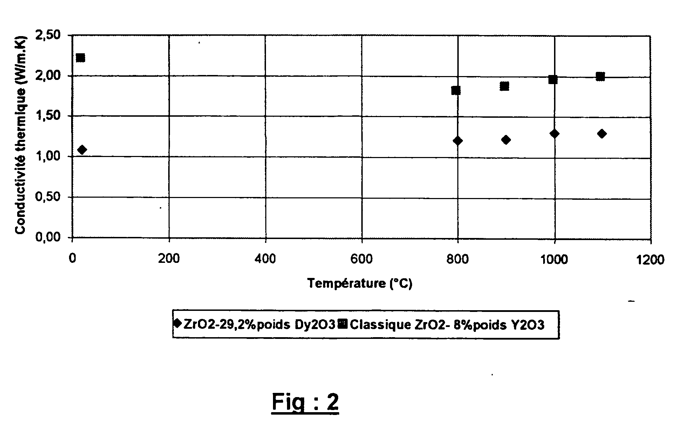

Les valeurs comparatives de la conductivité thermique obtenue à différentes températures pour un revêtement comportant une céramique de nouvelle composition conforme à l'invention et pour un revêtement comportant une céramique classique sont représentées sur la figure 2.

La conductivité thermique mesurée pour la céramique de nouvelle composition est égale à 1,08 W/m.K à 20°C alors que pour la céramique classique, la conductivité thermique mesurée est égale à 2,19W/m.K. A cette température de 20°C, la céramique de nouvelle composition permet donc de diminuer la conductivité thermique d'un facteur deux.

De même, si l'on compare les conductivités thermiques mesurées à 1100°C, la céramique de nouvelle composition permet de diminuer la conductivité thermique d'un facteur égal à 1,53.

Cette figure montre donc qu'à toutes les températures, la conductivité thermique est nettement plus faible pour la céramique de nouvelle composition que pour la céramique classique.

### EXEMPLE 3 (pas selon l'invention)

Un revêtement céramique est déposé par projection plasma sur une pièce Hastelloy X préalablement revêtue d'une sous-couche métallique de type MCrAlY. La composition du revêtement céramique est la suivante :
- ZrO₂ :: base
- Dy₂O₃ :: 11,2% en poids

Le revêtement brut de projection a ensuite subi un traitement thermique de 10 heures à 1100°C sous air, afin de stabiliser la céramique dans un état représentatif de son utilisation en service (ce traitement permet en particulier de restituer la stoechiométrie des oxydes présents dans la céramique). Après traitement, le revêtement selon l'invention présente un taux de porosité très voisin de celui classiquement mesuré pour une céramique de composition ZrO₂ - 8% en poids Y₂O₃, élaborée selon le même procédé, à savoir 8,5% de porosité environ.

Afin d'évaluer l'influence de cette nouvelle composition de céramique sur la conductivité thermique du revêtement céramique par rapport à la céramique classique de composition ZrO₂ - 8% en poids Y₂O₃ élaborée selon le même procédé, il a également été vérifié que les deux revêtements présentent la même microstructure.

La conductivité thermique mesurée pour le revêtement ZrO₂-11,2% en poids Dy₂O₃, est de 0,81 W/m.K à 1100°C, alors qu'elle est égale à 1,19 W/m.K pour le revêtement de céramique classique. La céramique de nouvelle composition décrite dans cet exemple apporte donc un gain de plus de 30% sur le pouvoir isolant de la céramique.

Dans ces exemples de réalisation précisément décrits la sous-couche de liaison peut être constituée d'un autre alliage tel que par exemple l'aluminiure de nickel simple ou modifié par des métaux tels que le chrome, le platine, le palladium, le ruthénium, l'iridium, l'osmium, le rhodium. La zircone contient en outre entre 0 et 30% en mole d'un oxyde contenant un ion métallique quadrivalent de masse supérieure à celle de l'ion zirconium, cet oxyde étant le dioxyde de hafnium. La pièce revêtue peut être réalisée dans un autre superalliage que l'Hastelloy X.

## Revendications

1. Composition de barrière thermique de faible conductivité thermique, **caractérisée en ce qu'**elle consiste en :
• une base de zircone,
• un oxyde de dysprosium ayant un double rôle de stabiliser la zircone et d'abaisser la conductivité thermique de la zircone
• et un oxyde d'un ion métallique quadrivalent ayant une masse atomique supérieure à celle du zirconium, cet oxyde étant le dioxyde de hafnium.

2. Composition de barrière thermique selon la revendication 1, **caractérisée en ce que** la proportion de dysprosium dans le revêtement est comprise entre 2 et 30% atomique.

3. Composition de barrière thermique selon la revendication 1, **caractérisé en ce que** la proportion d'oxyde d'ion métallique quadrivalent représente jusqu'à 30% en mole

4. Pièce mécanique en superalliage, **caractérisée en ce qu'**elle comporte un revêtement de céramique ayant une composition selon l'une quelconque des revendications précédentes.

5. Pièce mécanique en superalliage selon la revendication 4, **caractérisée en ce qu'**elle comporte en outre une sous-couche de liaison sur laquelle est déposée le revêtement de céramique

6. Pièce mécanique en superalliage selon la revendication 5, **caractérisée en ce que** la sous-couche est constituée d'un alliage apte à former une couche d'alumine protectrice par oxydation.

7. Pièce mécanique en superalliage selon la revendication 6 **caractérisée en ce que** la sous-couche de liaison est constituée d'un alliage de type MCrAlY , M étant un métal choisi parmi le nickel, le cobalt, le fer, ou un mélange de ces métaux.

8. Pièce mécanique en superalliage selon la revendication 6, **caractérisée en ce que** la sous-couche de liaison est constituée d'un aluminiure de nickel contenant éventuellement un métal choisi parmi le platine, le chrome, le palladium, le ruthénium, ou un mélange de ces métaux.

9. Méthode de réalisation d'un revêtement de barrière thermique sur un substrat en superalliage, **caractérisée en ce qu'**elle comporte les étapes suivantes :
• déposer une sous-couche de liaison sur le substrat en superalliage,
• déposer sur la sous-couche, un revêtement de céramique contenant de la zircone, un oxyde de dysprosium pour stabiliser la zircone et réduire la conductivité thermique par phonons de la zircone et jusqu'à 30% en mole de dioxyde de hafnium.

10. Méthode de réalisation d'un revêtement de barrière thermique selon la revendication 9, **caractérisée en ce qu'**elle comporte une étape supplémentaire consistant à oxyder la sous-couche de liaison préalablement au dépôt du revêtement céramique.

## Claims

1. Thermal barrier composition of low thermal conductivity, **characterized in that** it consists of:
• a zirconia base;
• a dysprosium oxide having the double role of stabilizing the zirconia and of lowering the thermal conductivity of the zirconia; and
• a metal oxide comprising a tetravalent metal ion having an atomic mass greater than that of a zirconium ion, this oxide being hafnium dioxide.

2. Thermal barrier composition according to Claim 1, **characterized in that** the proportion of dysprosium in the coating is between 2 and 30 at%.

3. Thermal barrier composition according to Claim 1, **characterized in that** the proportion of oxide having a tetravalent metal ion represents up to 30 mol%.

4. Mechanical part made of a superalloy, **characterized in that** it includes a ceramic coating having a composition according to any one of the preceding claims.

5. Mechanical part made of a superalloy according to Claim 4, **characterized in that** it further includes a tie sublayer on which the ceramic coating is deposited.

6. Mechanical part made of a superalloy according to Claim 5, **characterized in that** the sublayer consists of an alloy capable of forming a protective alumina layer by oxidation.

7. Mechanical part made of a superalloy according to Claim 6, **characterized in that** the tie sublayer consists of an alloy of the MCrAlY type, M being a metal chosen from nickel, cobalt and ion, or a mixture of these metals.

8. Mechanical part made of a superalloy according to Claim 6, **characterized in that** the tie sublayer consists of a nickel aluminide optionally containing a metal chosen from platinum, chromium, palladium and ruthenium, or a mixture of these metals.

9. Method of producing a thermal barrier coating on a superalloy substrate, **characterized in that** it comprises the following steps:
• a tie sublayer is deposited on the superalloy substrate; and
• a ceramic coating containing zirconia, a dysprosium oxide, for stabilizing the zirconia and reducing its phonon thermal conductivity, and up to 30 mol% of hafnium dioxide is deposited on the sublayer.

10. Method of producing a thermal barrier coating according to Claim 9, **characterized in that** it includes an additional step consisting in oxidizing the tie sublayer prior to deposition of the ceramic coating.

## Patentansprüche

1. Wärmedämmschichtzusammensetzung niedriger
Wärmeleitfähigkeit, **dadurch gekennzeichnet, dass** sie aus
- einer Zirkonoxidbasis
- einem Dysprosiumoxid, das eine zweifache Aufgabe des Stabilisierens des Zirkonoxids und des Senkens der Wärmeleitfähigkeit des Zirkonoxids besitzt
- und einem Oxid eines vierwertigen Metallions, das eine höhere Atommasse als die des Zirkoniums aufweist, wobei dieses Oxid Hafniumdioxid ist,
besteht.

2. Wärmedämmschichtzusammensetzung nach Anspruch 1, **dadurch gekennzeichnet, dass** der Dysprosiumanteil in der Beschichtung zwischen 2 und 30 Atom-% beträgt.

3. Wärmedämmschichtzusammensetzung nach Anspruch 1, **dadurch gekennzeichnet, dass** der Anteil des Oxids des vierwertigen Metallions bis zu 30 Mol-% darstellt.

4. Mechanisches Teil aus Superlegierung, **dadurch gekennzeichnet, dass** es eine Keramikbeschichtung mit einer Zusammensetzung nach einem der vorhergehenden Ansprüche aufweist.

5. Mechanisches Teil aus Superlegierung nach Anspruch 4, **dadurch gekennzeichnet, dass** es weiter eine Verbindungsunterschicht, auf der die Keramikbeschichtung aufgebracht ist, aufweist.

6. Mechanisches Teil aus Superlegierung nach Anspruch 5, **dadurch gekennzeichnet, dass** die Zwischenschicht aus einer Legierung besteht, die in der Lage ist, eine Aluminiumoxid-Schutzschicht durch Oxidation auszubilden.

7. Mechanisches Teil aus Superlegierung nach Anspruch 6, **dadurch gekennzeichnet, dass** die Verbindungsunterschicht aus einer Legierung des Typs MCrAlY besteht, wobei M ein Metall ist, das aus Nickel, Cobalt, Eisen gewählt ist, oder eine Mischung dieser Metalle ist.

8. Mechanisches Teil aus Superlegierung nach Anspruch 6, **dadurch gekennzeichnet, dass** die Verbindungsunterschicht aus einem Nickelaluminid besteht, das gegebenenfalls ein aus Platin, Chrom, Palladium, Ruthenium gewähltes Metall oder eine Mischung dieser Metalle aufweist.

9. Verfahren zur Herstellung einer Wärmedämmbeschichtung auf einem Substrat aus Superlegierung, **dadurch gekennzeichnet, dass** es die folgenden Schritte aufweist:
- Aufbringen einer Verbindungsunterschicht auf das Substrat aus Superlegierung,
- Aufbringen einer Keramikbeschichtung, die Zirkonoxid, ein Dysprosiumoxid zum Stabilisieren des Zirkonoxids und Senken der Wärmeleitfähigkeit durch Phononen des Zirkonoxids und bis zu 30 Mol-% Hafniumdioxid aufweist, auf die Unterschicht.

10. Verfahren zur Herstellung einer Wärmedämmbeschichtung nach Anspruch 9, **dadurch gekennzeichnet, dass** es einen Zusatzschritt aufweist, der im Oxidieren der Verbindungsunterschicht vor dem Aufbringen der Keramikbeschichtung besteht.
